# EUROPEAN PATENT SPECIFICATION

(11) **EP 1 342 824 B1**
(45) Date of publication and mention of the grant of the patent: **05.11.2008**
(21) Application number: 03075638.1
(22) Date of filing: 04.03.2003
(51) Int. Cl.: D04B 21/16, A01G 9/22, D03D 15/00

(54) **Screen with adjustable degree of screening and climatization making use of such a screen**
Schirm mit einstelbarem Abschirmungsgrad und Klimatisierung unter Verwendung dieses Schirm
Ecran réflechissant à degré de réflechissement adjustable et climatisation au moyen de cet écran

(30) Priority: 05.03.2002 BE 200200147
(43) Date of publication of application: 10.09.2003
(73) Proprietor: Bonar Technical Fabrics, 9240 Zele (BE)
(72) Inventor: Maes, Pieter, 8550 Zwevegem (BE)
(74) Representative: Gevers, François

(56) References cited:
- EP-A- 0 070 176
- EP-A- 0 481 909
- WO-A-96/10107
- DE-A- 3 035 232
- FR-A- 2 071 064
- US-A- 4 632 863

## Description

This invention relates to a screen, more particularly to a screen cloth manufactured according to a weaving or knitting process comprising a number of screen elements which are extending according to the direction of production of the screen, installed at respective intermediate distances away from one another and interconnected by means of textile threads or bands.

The term screen element is used in this patent application in the meaning of an element or a structure not, or only partly, allowing the light to pass irrespective of its shape or size and irrespective of the material of which it is made. Such an element may be, for instance, carried out in the form of a thread, a plate or a leaf, or it may be carried out in the form of a relatively small narrow band or strip. This screen element may constitute an elastic or easily bendable unit, but it may also be carried out as a not or difficultly bendable element.

The degree of screening of a screen is, in the context of this patent application, the extent in which the screen can stop the light or, in other words, the proportion between the amount of light stopped and the total amount of light that would have passed should the screen be removed. Therefore, a screen having a degree of screening of, for instance, 90% will stop 90% of the light falling on the screen, while the remaining 10% is passing. By an adjustable degree of screening, is meant that the degree of screening of the screen may be modified and may adopt at least two different values.

This invention also relates to a method for realizing a climatization in a space, where at least the air circulation and/or the air humidity and/or the concentration of CO₂ in that space are regulated.

The screen and the method according to this invention are primarily, but not exclusively applied in the agricultural and horticultural sector, where plants and all sorts of crops are cultivated in conditions where they are protected against bad weather conditions, for example, in entirely or partly covered spaces or greenhouses. Moreover, in these protected spaces, people wish to create the most favourable conditions possible at any moment for the growth and development of plants and crops. Here, the temperature and the luminous intensity are playing a most important part.

However, the requirements as to temperature and luminous intensity are different according to the sort of plants and according to the stage of growth of the plants. It is therefore necessary to be able to influence the climatical factors. To that effect, screen cloths have been developed, consisting of a fabric into which small flexible bands with an aluminium surface have been incorporated next to one another at fixed intermediate distances. These screen cloths partly have a closed structure (because of the aforementioned small bands) stopping the light entirely or partially and partly an open structure (the fabric between the small bands) primarily allowing the light and the heat to pass. Therefore, these screen cloths have a well-determined degree of screening. This type of screens comprises the features mentioned in the first paragraph of this description, and is known, for example, from EP 0 481 909 A1 or US 4 632 863.

A certain screen cloth has a constant unchanging ratio between the closed surface of the small strips on the one hand and the open intermediate surface on the other hand. Such screen cloths exist having degrees of screening of 55%, 65%, 75%, 88% or 99%.

However, a disadvantage of these known screen cloths is, that each time the luminous intensity and/or the reflected energy of the sun in the greenhouse should be modified another screen cloth must be provided for. Depending on the season, external climatical factors may strongly differ, because of which a screen cloth having a constant degree of screening is unable to ensure optimal growth condition for the plants at any moment.
On the one hand, replacing a screen cloth installed by a screen having another degree of screening is time consuming and complicated, on the other hand, investing in a series of screen cloths with different degrees of screening is, from an economic point of view, not feasible in the agricultural or horticultural sector. Since each sort of plant, for an optimal growth, has its specific requirements as to its climatical conditions, this means concretely that once a certain type of screen has been chosen, the range of plants which can possibly be cultivated is practically fixed.
In order to be able to combine an optimal climate during the daytime with a maximum saving of energy during the night, sometimes two screen cloths installed one above the another are used.

The air humidity, the air circulation and the concentration of CO₂ are also important for the growth of plants and crops. In order to regulate these climatic factors in the greenhouse, now the procedure is as follows.

At too high an air humidity and/or an insufficient air circulation and/or too low a concentration of CO₂ the screen cloth is rolled up or folded back over a restricted length, so that a slit is formed (a so-called draught slit), through which the space above the screen cloth (the space situated between the roof of the greenhouse and the screen) is connected with the space below the screen cloth (de space in which the plants are situated). Because of this, an air circulation is created and lower air humidity and a higher concentration of CO₂ is obtained. However, this method has a number of drawbacks.

A first drawback is that at first only a local effect is obtained and that it takes some time before the air circulation and the air humidity all over the greenhouse will be changed. Another drawback is that by creating a local draught slit, the climate in the greenhouse will be disturbed rather abruptly, which may be harmful to the plants, placed below this draught slit. A further drawback is that when opening the screen in order to reduce the air humidity, drops of condensation will fall down on the plants and might hurt them.

It is a purpose of this invention to provide a woven or knitted screen of the type indicated in the first paragraph of this description, which does not show the abovementioned drawbacks.

This purpose is attained providing a screen of said type, of which the screen elements are interconnected by means of elastically stretchable textile threads or bends, such that the intermediate distances between said screen elements are changeable in order to adjust the degree of screening of the screen. In a space which is at least partly covered with such a screen the air humidity and/or the air circulation and/or the concentration of CO₂ in the space are regulated by modifying the said intermediate distances between the screen elements.

As the screen elements extend according to the direction of the production (the warp direction or machine direction), a strip of fabric or knitwear is obtained with an unrestricted (and therefore to be chosen at will) length of the screen elements. The fabric or the knitwear may therefore extend over the full screen width. Moreover, it is much easier to keep band-shaped screen elements extending in the direction of production of a fabric or knitwear flat and undeformed.

The method described above for carrying out a climatization is preferably carried out with the help of a screen according to this invention.

In a preferred embodiment the screen elements mentioned are carried out as ribbons, strips or bands. Such screen elements allow a very good light and heat reflection and are very suitable for creating a plurality of small draught slits in order to realize an optimal regulation of the air circulation and the air humidity.

In a very efficient embodiment, the screen elements mentioned have at least one heat and light reflecting side. These screen elements consist, for example, of an elastic carrier made of polyester, onto which an aluminium film has been applied by vaporization or lamination. Of course, the screen is then installed in such a way that the reflecting side is directed outward in order to reflect the heat and the light of the sun.

Preferably, the screen according to this invention is carried out in such a manner that the fabric or the knitwear comprises elastic threads or bands running in the weft direction. Because of this, an infinitely variable regulation of the degree of screening is made possible. To this end, it is enough to apply a higher or a lower tension to the screen in the weft direction. This may be realized by means of a known winding device, the regulation of the degree of screening, for example, being carried out by holding the free edge of the screen while the screen is wound or unwound at the opposite edge and therefore will be stretched out, or return to a more closed position respectively.

In a strongly preferred embodiment, the screen is a fabric in which warp threads are interwoven with elastic weft threads or weft bands and in which the said screen elements extend in the warp direction.

Preferably, this fabric is made such that on both sides of each screen element at least two warp threads are interwoven with the elastically stretchable weft threads or weft bands according to a gauze weave (leno-weave). Because of the gauze weave, these warp threads are difficult to be shifted with respect to the weft threads (in the weft direction). Because these warp threads are situated on both sides of the screen elements they ensure that the screen elements will not start to slide in the woven structure in the weft direction. Because of this, a permanent homogenous structure of the screen is secured.

In another strongly preferred embodiment, the screen is a knitwear consisting of warp thread running in the direction of production, connected to one another by threads or bands extending crosswise, which are elastically stretchable while, in this knitwear, each screen element extends in the direction of production.

Preferably, in this knitwear, at least one warp thread is running on both sides of each screen element. Because of which the screen elements are prevented from sliding in the weft direction and a permanent homogenous structure of the knitted screen is assured.

Preferably, the screen elements comprise an elastic carrier onto which an aluminium film has been provided.

Screens with a degree of screening which is adjustable between about 55% and about 95% are preferred. That is why the elastic stretch of the elastically stretchable threads or bands preferably should amount to at least 15%.

Another aim of this invention is to provide a better method for carrying out a climatization in a space, by regulating the air humidity and/or the CO₂ concentration and/or the air circulation in this space.

This purpose is attained by a method in which the space is at least partly covered with a screen according to this invention, and in which the air humidity and/or the air circulation and/or the CO₂ concentration are regulated by modifying the intermediate distances between the screen elements of the screen.

According to this method, a great number of slits with an adjustable width are obtained, which will connect the space above and below the screen. Because of this, an air circulation evenly distributed in the entire greenhouse is obtained and a gradual change of the air humidity and/or the concentration of CO₂ which will take place at the same time. Because of this, the harmful effects of the local draught slits are avoided.

Of course, the screen can also be used to regulate the luminous intensity and the temperature of the space. In order to prevent a loss of heat from the greenhouse (during the night), the screen may be placed in the position most closed and used as a heat-insulating (and energy saving) screen.

This method runs off quite efficiently when a screen is used where the screen elements are carried out as strips, ribbons or bands, because the slits formed between such elements will ensure a very good air circulation.

The regulation of the temperature and the luminous intensity pass off particularly well if the surfaces of the screen elements directed towards the sun are carried out as light and heat reflecting surfaces. For instance, the screen elements may be composed of a carrier onto which an aluminium film has been applied.

According to the method according to the present invention, a very complete climatization is possible. The temperature, the luminous intensity, the air humidity, the air circulation and/or the concentration of CO₂ can be regulated very efficiently by means of one single screen and a simple regulation device.

In the following detailed description of a number of screens according to this invention, the said characteristics and advantages of this invention are further clarified. It should be clear that the only intention of this description consists in clarifying the general principles of this invention by means of a few concrete examples and that therefore nothing in this description may be interpreted as a restriction of the scope of the patent rights set forth in the claims, neither of the field of application of this invention.

In the following description reference is made by means of reference numbers to the attached drawings, of which:
- figures 1 and 2 represent an enlarged image of a part of a woven screen according to the invention in a closed (not stretched) situation and in a stretched situation;
- figure 3 schematically represents an enlarged image of a part of a knitted screen according to the invention in a closed position, and
- figure 4 schematically represents an enlarged image of a part of another embodiment of a knitted screen according to the invention in a stretched situation.

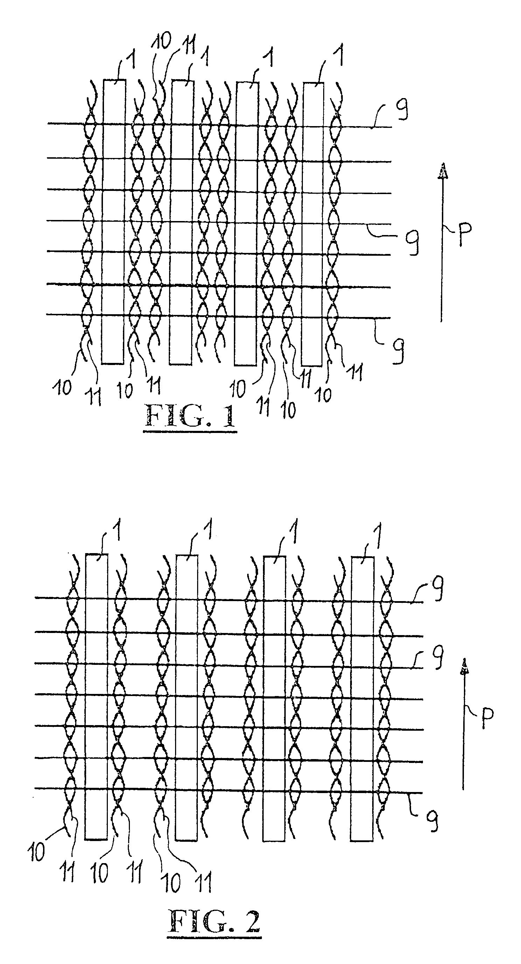

In figure 1 part of a screen cloth is represented having been manufactured according to a weaving process from warp threads (10),(11) and weft threads (9). In the warp direction, the direction of production of the fabric (indicated by the arrow P) also small elastic bands or strips (1) have been incorporated in the fabric. These strips (1) are running over and under the weft thread (9) alternately.

The weft threads (9) used are elastically stretchable, having an elastic stretch of about 15%. The strips (1) consist of a polyester carrier unto which an aluminium film has been laminated, and are carried out with a shining side reflecting heat and light very well and a dull side. In a greenhouse, the screen is installed with its reflecting side directed outwards, so that sunlight and the solar heat are reflected.

Between the different strips (1), each time two pairs of non or hardly stretchable warp threads (10),(11) have been provided. The warp threads (10),(11) of each pair are interwoven with the elastic weft threads (9) according to a generally known gauze weave (also called "leno weave").

The screen cloth can be stretched in the weft direction (see figure 2). The part of the closed surfaces of the strips (1) with respect to the entire screen surface will then be reduced, so that the degree of screening of the screen will decrease. In the closed situation of figure 1, the screen has a degree of screening of about 95%. In the position maximally stretched of figure 2, the degree of screening is reduced to about 55%. All degrees of screening situated between these extreme values are, of course, likewise adjustable by stretching the screen to a lesser extent. The degree of screening can be adjusted continuously in a very quick and easy manner.

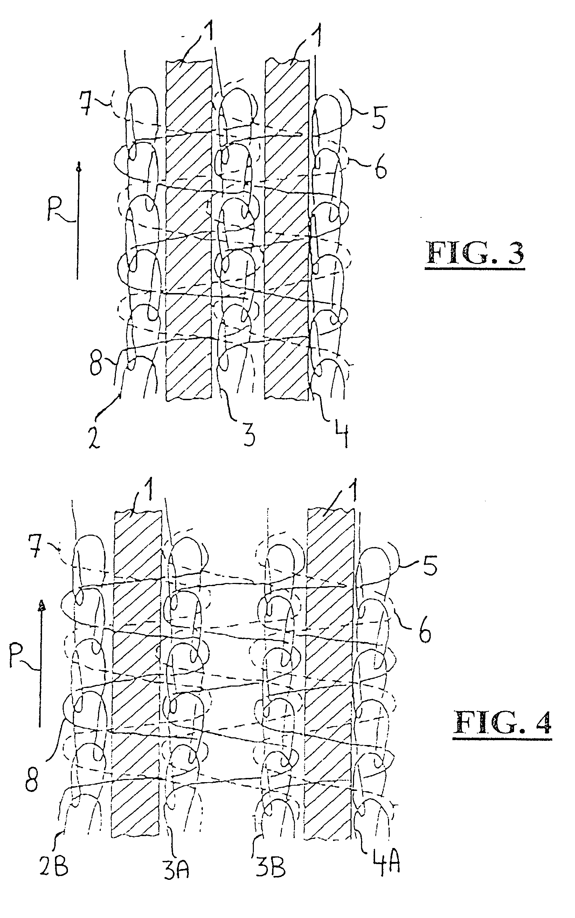

The screen cloth may be manufactured also by a knitting process (see figures 3 and 4). Such knitwear consists of warp threads (2),(3),(4) forming loops or stitches and primarily extending in the direction of production (P) and which are connected to one another by means of elastically stretchable weft threads (5),(6),(7) (likewise called binding yarn). The warp threads (2),(3);(3),(4) connected to one another by the two, by means of two or several weft threads (5), (6); (7), (8) extending through a loop of the one weft thread and a loop of the other weft thread alternately.

Between the warp threads, elastic strips (1) are provided having the same characteristics as provided for in the fabric described above. These strips (1) extend in the warp direction, parallel to the warp threads, and have been incorporated in the knitwear. In the embodiment according to figure 3 one warp thread (2),(3),(4) and one strip (1) have been provided alternately. In the embodiment according to figure 4 two warp threads (3A), (3B) have been provided each time between the successive strips (1). Because the strips (1) are situated between the warp threads they are prevented from sliding in the knitwear. The knitwear of figure 4 is represented in a position maximally stretched out in the weft direction. The knitwear is produced in the warp direction on a knitting machine. This direction, the direction of production (P) is also indicated by an arrow (P) in the figures 3 and 4. The adjustment or regulation of the degree of screening of the screen and the climatization according to this invention may be realized by simple means. For instance, use may be made of a known winding device in order to wind the screen one side, while the opposite side of the screen is stopped. When winding the screen it is stretched more, when unwinding the screen it will return in the less stretched position. In this manner, it is possible to adjust the degree of screening in a very simple manner.

## Claims

1. A screen manufactured according to a weaving or knitting process, comprising a number of screen elements (1) which are extending according to the direction of production (P) of the screen, installed at respective intermediate distances away from one another and interconnected by means of textile threads or bands (5-9), **characterized in that** the screen elements (1) are interconnected by means of elastically stretchable textile threads or bands (5-9) such that the intermediate distances between said screen elements (1) are changeable in order to adjust the degree of screening of the screen.

2. Screen according to claim 1, **characterized in that** the screen elements (1) are carried out as ribbons, strips or bands.

3. A screen according to claim 1 or 2, **characterized in that** the screen elements (1) have at least one light-reflecting side.

4. A screen according to any of the preceding claims, **characterized in that** the fabric or the knitwear comprises elastically stretchable threads or bands (5),(6),(7),(8),(9) running in the weft direction.

5. A screen according to any of the preceding claims, **characterized in that** it is a fabric in which the warp threads (10),(11) have been interwoven with elastically stretchable weft threads (9) or weft bands and in which the screen elements (1) extend in the warp direction.

6. A screen according to claim 5, **characterized in that** on both sides of each screen element (1) at least two warp threads (10),(11) have been interwoven with the elastic weft threads (9) or weft bands by a gauze weave.

7. A screen according to any of the preceding claims, **characterized in that** it is a knitwear consisting of warp threads (2), (3), (4); (2B), (3B), (4A) running in the direction of production, connected to one another by threads (5),(6),(7),(8) or bands extending crosswise, which are elastically stretchable, and in which each screen element (1) extends in the direction of production (P).

8. A screen according to claim 7, **characterized in that** on both sides of each screen element (1) at least one warp thread (2), (3), (4); (28), (3A), (3B) is running.

9. A screen according to any of the preceding claims,
**characterized in that** the screen elements (1) comprise an elastic carrier onto which an aluminium film has been provided.

10. A screen according to any of the preceding claims, **characterized in that** its degree of screening is adjustable between about 55% and about 95%.

11. Method for carrying out a climatization in a space, the air humidity and/or the air circulation and/or the concentration of CO₂ in the space being regulated, **characterized in that** this space is at least partly covered by a screen as claimed in any of the preceding claims, and **in that** the air humidity and/or the air circulation and/or the concentration of CO₂ in the space are regulated by modifying the intermediate distances between the screen elements (1).

12. Method for carrying out a climatization according to claim 11, **characterized in that** the screen elements (1) are carried out as ribbons, bands or strips.

13. Method for carrying out a climatization according to claim 11 or 12, **characterized in that** the temperature and the luminous intensity in the space are regulated by modifying said intermediate distances.

## Patentansprüche

1. Ein Schirm hergestellt nach einem Webe- oder Strickverfahren, welcher eine Anzahl von Schirmelementen (1) umfasst, die in die Produktionsrichtung (P) des Schirms verlaufen, installiert in jeweiligen Zwischenabständen voneinander und miteinander verbunden mittels Textilfäden oder -bändern (5-9), **dadurch gekennzeichnet, dass** die Schirmelemente (1) mittels elastisch dehnbarer Textilfäden oder -bänder (5-9) so miteinander verbunden sind, dass die Zwischenabstände zwischen den erwähnten Schirmelementen (1) veränderbar sind, um den Abschirmungsgrad des Schirms anzupassen.

2. Schirm nach Anspruch 1, **dadurch gekennzeichnet, dass** die Schirmelemente (1) als Bänder, Streifen oder Gurte ausgeführt sind.

3. Ein Schirm nach Anspruch 1 oder 2, **dadurch gekennzeichnet, dass** die Schirmelemente (1) zumindest eine Licht reflektierende Seite haben.

4. Ein Schirm nach jedem der vorigen Ansprüche, **dadurch gekennzeichnet, dass** der Stoff oder die Wirkware elastisch dehnbare Fäden oder Bänder (5),(6),(7),(8),(9) umfasst, die in die Weberichtung verlaufen.

5. Ein Schirm nach jedem der vorigen Ansprüche, **dadurch gekennzeichnet, dass** es sich um einen Stoff handelt, in dem die Kettenfäden (10), (11) mit elastisch dehnbaren Schussfäden (9) oder Schussbändern verwoben wurden und in dem die Schirmelemente (1) in die Kettrichtung verlaufen.

6. Ein Schirm nach Anspruch 5, **dadurch gekennzeichnet, dass** auf beiden Seiten jedes Schirmelements (1) zumindest zwei Kettenfäden (10), (11) mit den elastischen Schussfäden (9) oder Schussbändern durch eine Gazebindung verwoben wurden.

7. Ein Schirm nach jedem der vorigen Ansprüche, **dadurch gekennzeichnet, dass** er eine Wirkware ist bestehend aus Kettenfäden (2), (3), (4); (2B), (3B), (4A) laufend in Produktionsrichtung, miteinander verbunden durch Fäden (5), (6), (7), (8) oder Bänder, kreuzweise verlaufend, die elastisch dehnbar sind, und wobei jedes Schirmelement (1) in Produktionsrichtung (P) verläuft.

8. Ein Schirm nach Anspruch 7, **dadurch gekennzeichnet, dass** auf beiden Seiten jedes Schirmelements (1) zumindest ein Kettenfaden (2), (3), (4); (2B), (3A), (3B) verläuft.

9. Ein Schirm nach jedem der vorigen Ansprüche, **dadurch gekennzeichnet, dass** das Schirmelement (1) einen elastischen Träger umfasst, auf dem eine Aluminiumfolie angebracht wurde.

10. Ein Schirm nach jedem der vorigen Ansprüche, **dadurch gekennzeichnet, dass** sein Abschirmungsgrad zwischen etwa 55 % und etwa 95 % eingestellt werden kann.

11. Verfahren zur Durchführung einer Klimatisierung in einem Raum, wobei die Luftfeuchtigkeit und/oder die Luftzirkulation und/oder die CO₂-Konzentration im Raum reguliert werden, **dadurch gekennzeichnet, dass** dieser Raum zumindest teilweise durch einen Schirm wie beansprucht in jedem der vorigen Ansprüche bedeckt ist und dass die die Luftfeuchtigkeit und/oder die Luftzirkulation und/oder die CO₂-Konzentration im Raum durch Veränderung der Zwischenabstände zwischen den Schirmelementen (1) reguliert werden.

12. Verfahren zur Durchführung einer Klimatisierung nach Anspruch 11, **dadurch gekennzeichnet, dass** die Schirmelemente (1) als Bänder, Gurte oder Streifen ausgeführt sind.

13. Verfahren zur Durchführung einer Klimatisierung nach Anspruch 11 oder 12, **dadurch gekennzeichnet, dass** die Temperatur und die Lichtintensität im Raum durch Veränderung der erwähnten Zwischenabstände reguliert werden.

## Revendications

1. Écran fabriqué selon un processus de tissage ou de tricotage, comprenant un nombre d'éléments d'écran (1) qui s'étendent suivant le sens de production (P) de l'écran, sont installés à des distances intermédiaires respectives les uns des autres et sont reliés au moyen de fils ou de bandes textiles (5 - 9), **caractérisé en ce que** les éléments d'écran (1) sont reliés entre eux au moyen de fils ou bandes textiles (5 - 9) élastiquement étirables de telle manière que les distances intermédiaires entre lesdits éléments d'écran (1) puissent être modifiées afin d'ajuster le degré de tamisage de l'écran.

2. Écran selon la revendication 1, **caractérisé en ce que** les éléments d'écran (1) sont réalisés comme des rubans, des lanières ou des bandes.

3. Écran selon la revendication 1 ou 2, **caractérisé en ce que** les éléments d'écran (1) ont au moins un côté réfléchissant la lumière.

4. Écran selon l'une quelconque des revendications précédentes, **caractérisé en ce que** le tissu ou le tricot comprend des fils ou des bandes (5), (6), (7), (8), (9) élastiquement étirables courant dans la direction de la trame.

5. Écran selon l'une quelconque des revendications précédentes, **caractérisé en ce qu'**il s'agit un tissu dans lequel les fils de chaîne (10), (11) ont été entrelacés avec des fils de trame (9) ou des bandes de trame élastiquement étirables et dans lequel les éléments d'écran (1) s'étendent dans la direction de la chaîne.

6. Écran selon la revendication 5, **caractérisé en ce que** sur les deux côtés de chaque élément d'écran (1), au moins deux fils de chaîne (10), (11) ont été entrelacés avec les fils de trame (9) ou bandes de trame élastiques selon une armure de gaze.

7. Écran selon l'une quelconque des revendications précédentes, **caractérisé en ce qu'**il s'agit d'un tricot consistant en fils de chaîne (2), (3), (4); (2B), (3B), (4A) courant dans la direction de production, reliés les uns aux autres par des fils (5), (6), (7), (8) ou bandes s'étendant transversalement, qui sont élastiquement étirables, et dans lequel chaque élément d'écran (1) s'étend dans la direction de production (P).

8. Écran selon la revendication 7, **caractérisé en ce qu'**au moins un fil de chaîne (2), (3), (4); (2B), (3B), (4A) court sur les deux côtés de chaque élément d'écran (1).

9. Écran selon l'une quelconque des revendications précédentes, **caractérisé en ce que** les éléments d'écran (1) comprennent un support élastique sur lequel un film d'aluminium a été prévu.

10. Écran selon l'une quelconque des revendications précédentes, **caractérisé en ce que** son degré de tamisage peut être ajusté entre environ 55 % et environ 95 %.

11. Procédé pour réaliser une climatisation dans un espace, l'humidité de l'air et / ou la circulation d'air et / ou la concentration de CO₂ dans l'espace étant régulées, **caractérisé en ce que** cet espace est au moins en partie couvert par un écran tel que revendiqué dans l'une quelconque des revendications précédentes, et **en ce que** l'humidité de l'air et / ou la circulation d'air et / ou la concentration de CO₂ dans l'espace sont régulées par modification des distances intermédiaires entre les éléments d'écran (1).

12. Procédé pour réaliser une climatisation selon la revendication 11, **caractérisé en ce que** les éléments d'écran (1) sont réalisés comme des rubans, des lanières ou des bandes.

13. Procédé pour réaliser une climatisation selon la revendication 11 ou 12, **caractérisé en ce que** la température et l'intensité lumineuse dans l'espace sont régulées par modification desdites distances intermédiaires.
